# EUROPEAN PATENT APPLICATION

(11) **EP 1 521 245 A1**
(43) Date of publication of application: **06.04.2005**
(21) Application number: 04023406.4
(22) Date of filing: 01.10.2004
(51) Int. Cl.: G11B 5/72, G11B 5/84

(54) **Magnetic recording medium and method for producing the same**

(30) Priority: 03.10.2003 JP 2003345530
(71) Applicant: Fuji Photo Film Co., Ltd., Kanagawa (JP)
(72) Inventor: Moriwaki, Kenichi, Odawara-shi Kanagawa (JP); Usuki, Kazuyuki, Odawara-shi Kanagawa (JP)
(74) Representative: HOFFMANN - EITLE

(57) **Abstract**

A magnetic recording medium has a support provided with at least on one side of the support a magnetic layer having at least a granular structure, and a protective layer in this order, wherein the protective layer is a hard carbon film formed by an ion beam deposition process, and the protective layer has a ratio of a strength of G peak (IG) having a peak in a range of from 1,500 to 1,600 cm⁻¹ in Raman spectrum according to Raman spectroanalysis and a strength of D peak (ID) having a peak in a range of from 1,350 to 1,430 cm⁻¹, (ID/IG), of from 0.5 to 1.0.

## Description

### BACKGROUND OF THE INVENTION

### TECHNICAL FIELD

The present invention relates to a magnetic recording medium for use in the recording of digital data and a method for producing the same.

### DESCRIPTION OF THE RELATED ART

With the spread of the Internet in recent years, the use form of the computer has been changed, e.g., to the form of processing a great volume of motion picture data and sound data with a personal computer. Along with these trends, the storage capacity required of the magnetic recording medium, such as hard discs, has increased.

In a hard disc apparatus, a magnetic head slightly floats from the surface of a magnetic disc with the rotation of the magnetic disc, and magnetic recording is done by non-contact recording system. This mechanism prevents the magnetic disc from breaking by the touch of the magnetic head and the magnetic disc. With the increase of density of magnetic recording, the flying height of a magnetic head is gradually decreased, and now the flying height of from 10 to 20 nm has been realized by the use of a magnetic disc comprising a specularly polished hyper-smooth glass substrate having provided thereon a magnetic recordinglayer. Inamagneticrecordingmedium, a CoPtCr series magnetic layer/a Cr under layer are generally used, and the direction of easy magnetization of the CoPtCr series magnetic layer is controlled in the direction of in-plane of the film by the Cr under layer by increasing the temperature as high as 200 to 500°C. Further, the segregation of Cr in the CoPtCr series magnetic layer is accelerated and the magnetic domain in the magnetic layer is separated. Areal recording density and recording capacity of hard disc drive have markedly increased during the past few years by technological innovation, e.g., the flying height reduction of a head, the improvement of the structure of a head, and the improvement of the recording film of a disc.

With the increase of throughput of digital data, there arises a need of moving a high capacity data, such as moving data, by recording on a removable medium. However, since the substrate of a hard disc is made of a hardmaterial and the distance between a head and a disc is extremely narrow as described above, there is the fear of happening of accident by the impact during operation and entraining dusts when a hard disc is tried to be used as a removable medium such as a flexible disc and a rewritable optical disc, and so a hard disc cannot be used.

Further, when a high temperature sputtering film-forming method is used in the manufacture of a recording medium, not only productivity is poor but also the cost in mass production increases, thus hard discs cannot be manufactured inexpensively.

On the other hand, since the substrates of flexible discs are flexible polymer films and they are medium capable of contact recording, excellent in removability, and can be manufactured inexpensively. However, now commercially available flexible discs have a structure having recording layers formed by coating magnetic powder with a polymer binder and an abrasive on a polymer film. Therefore, as compared with hard discs having a magnetic layer formed by sputtering, flexible discs are inferior in high density recording characteristics, and the achieved recording density of flexible discs is only 1/10 or less of that of hard discs.

Accordingly, a ferromagneticmetal thin filmtype flexible disc having a recording film formed by the same sputtering method as in hard discs is suggested. However, when it is tried to form the same magnetic layer as that of hard discs on a polymer film, the polymer film is greatly damaged by heat and it is difficult to put such a flexible disc to practical use. Therefore, it is also suggested to use highly heat resisting polyimide and aromatic polyamide films as polymer films, but these heat resistive films are very expensive and it is also difficult to put them to practical use. When it is tried to form a magnetic layer with cooling a polymer film so as not to give thermal damage to the polymer film, the magnetic characteristics of the magnetic layer become insufficient, thus recording density can be hardly improved.

On the other hand, it has come to be known that when a ferromagnetic metal thin film magnetic layer comprising a ferromagnetic metal alloy and a nonmagnetic oxide, and an Ru series under layer, is used, almost the same magnetic characteristics as those of the CoPtCr series magnetic layer formed under temperature conditions as high as from 200 to 500°C can be obtained even when a recording layer is formed under room temperature (refer to JP-A-2001-291230 and JP-A-2003-99918 (The term "JP-A" as used herein refers to an "unexamined published Japanese patent application".)).

Such a ferromagnetic metal thin film magnetic layer comprising a ferromagnetic metal alloy and a nonmagnetic oxide has a so-called granular structure as proposed in hard discs, and those which are disclosed in JP-A-5-73880 and JP-A-7-311929 can be used.

However, in a flexible disc using a metal thin filmmagnetic layer provided on a polymer film, sufficient running durability is not achieved yet in present situation by the abrasion due to sliding with a magnetic head in contact recording and reproducing.

Regarding these problems, as a method of forming a hard protective layer without being accompanied with the deformation of a polymer film substrate, a DLC (diamond-like carbon) protective layer formed by an RF plasma CVD system of doing film-forming in the state of making a substrate run along a can has been discussed (JP-A-3-113824 and JP-A-10-219459). To form a protective layer according to an RF plasma CVD system, it is necessary to attract the carbon ionized in plasma by applying bias voltage on the side of the substrate. However, since an electrically conductive material and an insulating material are mixed in a magnetic layer having a granular structure, sufficient bias cannot be applied to the surface of the magnetic layer when bias voltage is applied, so that it is difficult to obtain a protective layer having high hardness.

Further, when it is tried to form a DLC protective layer according to the RF plasma CVD system in a web system apparatus, a large quantity of a carbon film is adhered to the reaction tube where high density plasma is generated. Accordingly, when film forming is carried out for a long time, carbon is adhered on the substrate as contamination and exerts a bad influence. Therefore, this system is difficult to be applied to long web forming.

As the countermeasure of this problem, a method of forming a hard protective layer by an ion beam deposition process by using an ion beam gun having hot filaments and a grid has been discussed ( JP-A-2000-26002 and JP-A-2002-109718). However, as is disclosed in the above patents, since hot filaments are short-lived and contamination occurs due to the presence of the grid between the ion source and the substrate, protective layer formation for a long period of time is difficult.

In direct read after write and rewritable type optical discs typified by DVD-R and DVD-RW, the head and the disc are not close to each other as in a magnetic disc, therefore they are excellent in removability and widespread. However, from the thickness of light pickup and economical viewpoints, it is difficult for optical discs to take such a disc structure that both surfaces can be used as recording surfaces as in a magnetic disc, which is advantageous for increasing capacity. Further, optical discs are low in areal recording density and also in data transfer rate as compared with magnetic discs, and so their performance is not sufficient yet as rewritable high capacity recording media.

As described above, although there is a great demand for high capacity rewritable removable medium, those satisfying reliability and economical point are not obtained yet.

### SUMMARY OF THE INVENTION

The present invention has been done in the light of the prior art problems. An object of the present invention is to provide an inexpensive and high capacity magnetic recording medium having high performance and high reliability by forming a protective layer comprising a hard carbon film on a magnetic layer having a granular structure without occurrence of contamination.

The above object can be achieved by the following means.
1) A magnetic recording medium comprising a support provided with at least on one side of the support a magnetic layer having at least a granular structure, and a protective layer in this order, wherein the protective layer is a hard carbon film formed by an ion beam deposition process, and the protective layer has a ratio of a strength of G peak (IG) having a peak in a range of from 1, 500 to 1, 600 cm⁻¹ in Raman spectrum according to Raman spectroanalysis and a strength of D peak (ID) having a peak in a range of from 1,350 to 1,430 cm⁻¹, (ID/IG), of from 0.5 to 1.0.
2) The magnetic recording medium as described in the above 1) , wherein the hard carbon film formed by an ion beam deposition process is formed by using a gridless ion source having at least a gas introducing inlet(opening) capable of introducing hydrocarbon gas and a structure capable of applying a magnetic field and voltage.
3) The magnetic recording medium as described in the above 1) or 2), wherein the support is a flexible polymer support.
4) The magnetic recording medium as described in the above 1), 2) or 3), wherein the protective layer has a multilayer structure and the uppermost protective layer comprises a hard carbon film added with nitrogen.
5) The magnetic recording medium as described in any of the above 1) to 4), wherein an under layer containing at least Ru is provided between the support and the magnetic layer.
6) A method for producing a magnetic recording medium as described in any of the above 1) to 4) comprising a support provided with at least on one side of the support a magnetic layer having at least a granular structure, and a protective layer in this order, wherein the protective layer is formed by an ion beam deposition process using a gridless ion source having at least a gas introducing inlet capable of introducing hydrocarbon gas and a structure capable of applying a magnetic field and voltage, the magnetic field applied to the ion source is a range of from 0.03 T (300 Gauss) to 1 T (10,000 Gauss), and the voltage is a range of from 100 to 3,000 V.

According to the present invention, a magnetic recording medium preferably used in a high density magnetic recording apparatus, causing less interaction in the ferromagnetic substances, generating smaller noise, and having high reliability can be produced inexpensively by room temperature film-forming process.

### DETAILED DESCRIPTION OF THE INVENTION

Since the magnetic recording medium according to the present invention is provided with at least a magnetic layer having at least a granular structure, it becomes possible to achieve recording of high recording density similar to hard discs and the heightening of capacity even when film is formed at room temperature.

In addition, by providing a protective layer of a hard carbon film having the ratio of the strength of G peak (IG) having a peak in the range of from 1, 500 to 1, 600 cm⁻¹ in Raman spectrum according to Raman spectroanalysis and the strength of D peak (ID) having a peak in the range of from 1,350 to 1,430 cm⁻¹, (ID/IG), of from 0.5 to 1.0, on a magnetic layer by an ion beam depositionprocess, it becomes possible for the present invention to provide a highly reliable magnetic recording medium without bringing about contamination and capable of obtaining sufficient running durability even in contact recording with a magnetic head.

By providing such a magnetic layer and a protective layer, substrate heating as conventionally performed is unnecessary, and a magnetic recording medium having good S/N characteristics can be obtained even the substrate temperature is room temperature. Accordingly, the present invention can provide flat magnetic tapes and flexible discs having resistance to contact recording with not only a glass substrate andAl substrate but also a polymer film support without causing heat damage.

Although an Al substrate and a glass substrate can be used as the support of the magnetic recording medium in the mode of the present invention, it is more preferred to use a flexible polymer film in the point of productivity. The magnetic recording medium in the invention can be used in the form of a tape medium and also as a flexible disc medium.

The flexible disc in the invention using a flexible polymer film support has a structure having a center hole formed at the central part, and is encased in a cartridge formed of plastics. The cartridge is generallyprovidedwith an access window covered with a metal shutter, and a magnetic head is introduced to the flexible disc through the access window, whereby recording of signals on a flexible disc and reproduction are performed.

Flexible discs are described below, and the following descriptions can also be applied to magnetic tapes.

A flexible disc comprises a disc-like support comprising a flexible polymer film having on each of both surfaces of the support a magnetic layer and a protective layer. It is further preferred to be provided with an undercoat layer for improving a surface property and a gas barrier property, a gas barrier layer having functions of adhesion and a gas barrier property, an under layer for controlling the crystal orientation of a magnetic layer, a magnetic layer, a protective layer for protecting the magnetic layer from corrosion and abrasion, and a lubricating layer for improving running durability and anticorrosion in this order by lamination.

A magnetic layer may be an in-plane magnetic recording film having the axis of easy magnetization oriented in the horizontal direction to the support or may be a perpendicular magnetic recording film oriented in the perpendicular direction to the support. The direction of the axis of easy magnetization can be controlled by the material and crystal structure of the under layer and the composition and film forming condition of the magnetic layer.

A magnetic layer has a granular structure, and this is called a granular magnetic layer. A granular magnetic layer comprises a ferromagnetic metal alloy and a nonmagnetic oxide. In a granular structure, a ferromagnetic metal alloy and a nonmagnetic oxide are mixed macroscopically, but they take the structure that a nonmagnetic oxide covers ferromagnetic metal alloy fine particles microscopically, and the size of the ferromagnetic metal alloy fine particles is from 1 to 110 nm or so. A high coercive force can be obtained and the variation of the magnetic particle sizes becomes uniform by taking this structure, so that a low noise medium can be achieved.

As ferromagnetic metal alloys, alloys containing elements, e.g., Co, Cr, Pt, Ni, Fe, B, Si, Ta, Nb and Ru can be used, and Co-Pt-Cr, Co-Pt-Cr-Ta, Co-Pt-Cr-B and Co-Ru-Cr are particularly preferably used considering recording characteristics.

As nonmagnetic oxides, oxides of Si, Zr, Ta, B, Ti, Al, Cr, Ba, Zn, Na, La, In and Pb can be used, and SiOₓ is most preferred considering recording characteristics.

The mixing ratio of a ferromagnetic metal alloy to a nonmagnetic oxide (molar ratio) is ferromagnetic metal alloy/nonmagnetic oxide of preferably from 95/5 to 80/20, and particularly preferably from 90/10 to 85/15. By adjusting the mixing ratio as above, the segregation among magnetic particles becomes sufficient, the coercive force can be ensured, magnetic susceptibility can be secured, and the output of signals can be assured.

The thickness of a granular magnetic layer is preferably from 5 to 60 nm, more preferably from 5 to 30 nm. When the thickness is in this range, output can be secured by the reduction of noise and the restraint of the influence of thermal fluctuation, at the same time the resistance to the stress applied at the time of head-medium contact can be ensured, and running durability can be assured.

A granular magnetic layer can be formed by vacuum film-forming methods, e.g., vacuum deposition and sputtering. Of these methods, sputtering methods are preferably used in the invention for capable of forming a high quality and hyper thin film with ease. As sputtering methods, any of well-known DC sputtering methods and RF sputtering methods can be used in the invention. A web sputtering system of continuously forming a layer on a continuous film is preferably used, and a batch sputtering system and an in-line sputtering system as used in the manufacture of hard discs can also be used in the present invention.

General argon gases can be used as the gas in sputtering but other rare gases can also be used. A trace amount of oxygen gas may be introduced for adjusting the oxygen content of a nonmagnetic oxide or for the purpose of surface oxidation.

For forming a granular magnetic layer by a sputtering method, two kinds of a ferromagnetic metal alloy target and a nonmagnetic oxide target are used, and a co-sputtering method of these two targets canbe used. However, for improvingmagnetic particle size variation to thereby form a uniform film, it is preferred to use an alloy target of a ferromagnetic metal alloy and a nonmagnetic oxide. The alloy target can be manufactured by a hot press method.

In manufacturing a granular magnetic layer by a sputtering method, the pressure of Ar is preferably from 5 to 100 mTorr (from 0.7 to 13.3 Pa), and particularly preferably from 10 to 50 mTorr (from 1.3 to 6.7 Pa). When the Ar pressure in film formation is in this range, the crystallizability of the magnetic layer and the segregation among magnetic particles canbe ensured, sufficient magnetic characteristics can be obtained, noise is suppressed low, and a highly reliable magnetic recording medium having high film strength can be obtained.

When a granular magnetic layer is formed by a sputtering method, electric power to be charged is preferably from 1 to 100 W/cm², especially preferably from 2 to 50 W/cm². When the electric power charged is in this range, the crystallizability of the magnetic layer and the adhesion of the film are ensured, and the deformation of the support and the occurrence of cracks on the sputtered film can be prevented.

A protective layer comprises a hard carbon film, and a protective layer is provided for the purpose of preventing the corrosion of the metallic materials contained in a magnetic layer, and preventing the abrasion of a magnetic layer by the pseudo contact or contact sliding of a magnetic head and a magnetic disc, to thereby improve running durability and anticorrosion. A protective layer for achieving these objects is made of a hard film having hardness equal to or higher than the hardness of the material of the magnetic head, and materials which hardly cause burning during sliding and stably maintain the effect are preferred, since such hard films are excellent in tribological durability. At the same time, materials having fewer pinholes and free from contamination are more preferred, since they are excellent in anticorrosion and running durability. As such a hard carbon film for the protective layer, hard carbon films called DLC (diamond-like carbon) are exemplified.

As the evaluating means of hard carbon films, Raman spectroanalysis is exemplified. If Raman spectrum of a hard carbon film is examined, a broad peak is observed in Raman shift 1,000 to 1,800 cm⁻¹.

In the present invention, hard carbon films are controlled so that the ratio of the strength of G peak (IG) having a peak in the range of from 1, 500 to 1, 600 cm⁻¹ in Raman spectrum according to Raman spectroanalysis and the strength of D peak (ID) having a peak in the range of from 1,350 to 1,430 cm⁻¹, (ID/IG), is from 0.5 to 1.0, preferably from 0.4 to 1.4, and more preferably from 0.5 to 1.0.

The above G peak is a main peak and D peak is a shoulder. IG and ID are both peaks resulting from sp² structure, but the ratio (ID/IG) is said to be the reflection of the ratio of sp³ structure.

Further, the organic property of a film (polymer components: hydrogen-containing carbon components not hard) can be evaluated by the ratio B/A of strength B of G peak containing a background to strength A of G peak not containing a background, etc. In the present invention, the ratio B/A is preferably from 1.0 to 2.0, and more preferably from 1.0 to 1.5.

A protective layer may be a multilayer structure by the lamination of two or more kinds of thin films having different properties according to the ion beam deposition process of the present invention. For example, it is possible to reconcile anticorrosion and durability on a high level by providing a nitrogen-addedhard carbon film on the surface side for improving a sliding property and a hard carbon film on the magnetic layer side for improving hardness and anticorrosion.

Inmagnetic recording and reproduction, it is advantageous to high recording density that the distance between a magnetic head and a magnetic layer is smaller, so that the thickness of a protective layer is preferably from 2 to 10 nm in total, and more preferably from 2 to 8 nm.

Further, the magnetic recording layer preferably has a surface resistance ratio of 10 to 200 Ω/□. The surface resistance ratio is measured by four-terminal method.

As a means to form such a hard carbon film, an RF plasma CVD system is also exemplified, but it is preferred to use the ion beam deposition process of the invention in the light of the film property, contamination, the deformation of a support and the variation of film thickness.

High density plasma is formed by applying appropriate magnetic field and electric field to the ion source used in the ion beam deposition process of the invention while introducing hydrocarbon gas. Since ionized carbon is forced out by applying strong positive potential to the ion source, a fine carbon film is formed. That is, bias voltage application to a support and a grid that causes contamination are not necessary in the ion beam deposition process of the invention, so that it becomes possible to form a hard protective film free from contamination even on a support having a granular magnetic layer containing an electrically conductive material and an insulating material as mixture. In addition, the ion beam deposition process of the invention does not use short-livedparts, e. g., hot filaments, so that it becomes possible to form a hard protective layer stably for a long period of time.

Rare gases, e.g., hydrocarbon gas and Ar, and nitrogen can be used as the gas in forming a hard protective layer by the ion beam deposition process. The chamber pressure in film deposition is preferably 10 mTorr (1.3 Pa) or less, more preferably 5 mTorr (0.7 Pa) or less. When the chamber pressure is 10 mTorr (1.3 Pa) or less, since the possibility of collision of ionized carbon ions in high density plasma with other ions is low, the energy of carbon ions is high. Accordingly, a finer and harder carbon film is formed on arrival at a support.

The voltage applied to the anode in the ion source is preferably from 100 to 3,000 V, more preferably from 500 to 2, 000 V. The voltage applied to the cathode is preferably from 0 to -1, 000 V, more preferably from 0 to -500 V. The magnetic field applied to the ion source surface is preferably from 0.03 T (300 Gauss) to 1 T (10,000 Gauss), more preferably from 0.05 T (500 Gauss) to 0.5 T (5, 000 Gauss) . By setting the electric potential and the magnetic field like these, plasma density can be ensured, ionization is accelerated, the energy to force out ionized carbon can be secured, a sufficiently fine hard carbon film can be formed with few influence upon the support by the ionized carbon, the deformation of the support and the occurrence of cracks on the film can be prevented, and the occurrence of arc discharge between the anode and the cathode can be prevented.

It is preferred to provide an under layer for the purpose of controlling the crystal orientation of a magnetic layer. As such an under layer, Ru, Ru alloys, Cr, Cr alloys, Ti and Ti alloys can be used, but for obtaining sufficient crystallizability by film deposition at room temperature, it is preferred to use Ru and Ru alloys. The orientation property of a magnetic layer can be improved by using such an under layer, whereby the recording characteristics can be improved.

The thickness of an under layer is preferably from 5 to 100 nm, and particularly preferably from 5 to 50 nm. When the thickness of an under layer is in this range, magnetic characteristics can be improved, good productivity can be achieved, enlarging of crystal particles can be restrained, increase of noise is suppressed, and further, the resistance to the stress applied at the time of head-medium contact is assured, so that running durability is secured.

An under layer can be formed by vacuum film forming methods, e.g., vacuum deposition and sputtering. Of these methods, a sputtering method is preferably used in the invention for capable of forming a high quality and hyper thin film with ease. As a sputtering method, any of well-known DC sputtering methods and RF sputtering methods can be used in the invention. A web sputtering system of continuously forming a film on a continuous film is preferably used in the case of a flexible disc using a flexible polymer film support, and a batch sputtering system and an in-line sputtering system as used in the case where an aluminum substrate and a glass substrate are used can also be used in the present invention.

General argon gases can be used as the gas in sputtering an under layer but other rare gases can also be used. A trace amount of oxygen gas maybe introduced for controlling the lattice constant of an under layer.

A seed layer may be provided between an under layer and a support for the purpose of increasing crystal orientation property of the under layer and imparting electrical conductivity.

As such a seed layer, Ti and W alloys are preferably used, but other alloys may also be used.

The thickness of a seed layer is preferably from 1 to 30 nm. When the thickness of a seed layer is in this range, productivity is secured and enlarging of crystal particles is restrained, whereby noise is suppressed.

A seed layer can be formed by vacuum film forming methods, e.g., vacuum deposition and sputtering. Of these methods, a sputtering method can form a high quality and hyper thin film with ease.

It is preferred to provide a gas barrier layer between a support and an under layer for the purpose of the improvement of adhesion and gas barrier. In the case where a seed layer is provided, a gas barrier layer is preferably provided between the seed layer and a support.

As such a gas barrier layer, a single substance of nonmetallic elements, mixtures of nonmetallic elements, or compounds comprising Ti and nonmetallic elements can be used. These materials have resistance to the stress applied at the time of head-medium contact.

The thickness of a gas barrier layer is preferably from 5 to 100 nm, particularly preferably from 5 to 50 nm. When the thickness of a gas barrier layer is in this range, productivity is secured and the thickening of crystal particles is restrained, whereby noise is suppressed.

A gas barrier layer can be formed by vacuum film forming methods, e.g., vacuum deposition and sputtering. Ahighquality and hyper thin film can be formed easily by a sputtering method.

As a support, flexible resin films (flexible polymer supports) are preferably used for avoiding the impact at the time of the touch of a magnetic head and a magnetic disc. As the examples of such resin films, resin films comprising aromatic polyimide, aromatic polyamide, aromatic polyamideimide, polyether ketone, polyether sulfone, polyether imide, polysulfone, polyphenylene sulfide, polyethylene naphthalate, polyethylene terephthalate, polycarbonate, triacetate cellulose and fluorine resin are exemplified. Polyethylene terephthalate and polyethylene naphthalate are particularly preferably used in the invention from the viewpoint of the cost and surface property, since good recording characteristics can be achieved without heating a support.

A lamination comprising a plurality of resin films may be used as a support. Byusing a laminated film, warp andwaviness resulting from a support itself can be reduced, which conspicuously improve the scratch resistance of a magnetic recording layer.

As laminating methods, roll lamination by heat rollers, lamination by plate hot press, dry lamination of laminating by coating an adhesive on the surface to be adhered, and lamination of using an adhesive sheet formed in advance in the form of a sheet are exemplified. The kinds of adhesives are not especially restricted and a general hot melt adhesive, a thermosetting adhesive, a UV-curable type adhesive, anEB-curable type adhesive, a sticky sheet, and an anaerobic adhesive can be used.

The thickness of a support is generally from 10 to 200 µm, preferably from 20 to 150 µm, and more preferably from 30 to 100 µm. When the thickness of a support is in this range, the stability at high speed rotation can be maintained, run out can be suppressed, the rigidity at rotation can be maintained low, the impact by touch can be avoided, and jumping of a magnetic head can be prevented.

The flexural rigidity of a support represented by the following equation is preferably the value of from 0.5 to 2.0 kgf/mm² (from 4.9 to 19.6MPa) when b is 10mm, and more preferably from 0.7 to 1.5 kgf/mm² (from 6.9 to 14.7 MPa).

Flexural rigidity of support = Ebd³/12 In the equation, E represents a Young's modulus, b represents a film breadth, and d represents a film thickness.

The surface of a support is preferably as smooth as possible for performing recording with a magnetic head. The unevenness of the surface of a support markedly degrades the recording and reproducing characteristics of signals. Specifically, when an undercoat layer described later is used, the surface roughness in central line average surface roughness (Ra) measured with an optical surface roughness meter is not greater than 5 nm, preferably not greater than 2 nm, and the height of spine measured with a feeler type roughness meter is not greater than 1 µm, preferably not greater than 0.1 µm. When an undercoat layer is not used, the surface roughness in central line average surface roughness (Ra) measured with an optical surface roughness meter is not greater than 3 nm, preferably not greater than 1 nm, and the height of spine measured with a feeler type roughness meter is not greater than 0.1 µm, preferably not greater than 0.06 µm.

It is preferred to provide an undercoat layer on the surface of a support for the purpose of improving a plane surface property and a gas barrier property. For forming a magnetic layer by sputtering, it is preferred that an undercoat layer be excellent in heat resistance. As the materials of an undercoat layer, e.g., polyimide resins, polyamideimide resins, silicone resins and fluorine resins can be used. Thermosetting polyimide resins and thermosetting silicone resins have a high smoothing effect and particularly preferred. The thickness of an undercoat layer is preferably from 0.1 to 3.0 µm. When other resin films are laminated on a support, an undercoat layer may be formed before lamination processing, or an undercoat layer may be formed after lamination processing.

As thermosetting polyimide resins, polyimide resins obtained by thermal polymerization of an imide monomer having two or more unsaturated terminal groups in the molecule, e.g., bisallylnadiimide "BANI" (manufactured by Maruzen Petrochemical Co., Ltd.) are preferably used. This imide monomer can be thermally polymerized at a relatively low temperature after being coated in the state of a monomer on the surface of a support, and so the material monomer can be directly coated on a support and cured. Further, the imide monomer can be used by being dissolved in ordinary solvents, is excellent in productivity and working efficiency, has a small molecular weight, and a solution of the imide monomer is low in viscosity, so that it gets into the unevenness well in coating and is excellent in smoothing effect.

As thermosetting silicone resins, silicone resins obtained by polymerization by a sol-gel method with silicone compounds having introduced an organic group as the starting material are preferably used. The silicone resins have a structure in which a part of the silicon dioxide bonds is substituted with an organic group, and the resins are greatly excellent in heat resistance as compared with silicone rubbers andmore flexible than silicon dioxide films, therefore, cracking and peeling are hardly generated when a film of the silicone resins is formed on a support comprising a flexible film. In addition, since the starting material monomers can be directly coated on a support and hardened, general-purpose solvents can be used, the resins get into the unevenness well, and smoothing effect is high. Further, since condensation polymerization reaction advances from comparatively low temperature by the addition of a catalyst such as an acid and a chelating agent, hardening can be expedited, and a resin film can be formed with a general-purpose coating apparatus. Thermosetting silicone resins are excellent in a gas barrier property of shielding gases generating from a support when a magnetic layer is formed and hindering the crystallizability and orientation of the magnetic layer and the under layer, so that they can be particularly preferably used.

It is preferred to provide minute spines (texture) on the surface of an undercoat layer for the purpose of reducing the real contact area of a magnetic head and a magnetic disc and improving a sliding property. Further, the handling property of a support can be improved by providing minute spines. As methods of forming minute spines, a method of coating spherical silica particles and a method of coating an emulsion to thereby form the spines of an organic substance can be used, and a method of forming minute spines by coating spherical silica particles is preferred for ensuring the heat resistance of the undercoat layer.

The height of minute spines is preferably from 5 to 60 nm, more preferably from 10 to 30 nm. When the height of minute spines is too high, the recording/reproducing characteristics of signals are deteriorated by the spacing loss between the recording/reproducing heads and the medium. While when the height of minute spines is too low, the improving effect of a sliding property can be hardly achieved. The density of minute spines is preferably from 0.1 to 100/µm², and more preferably from 1 to 10/µm². When the density of minute spines is two low, the improving effect of a sliding property can be hardly obtained, andwhen the density is too high, agglomeratedparticles increase, and high spines increase, so that recording/reproducing characteristics deteriorate.

Minute spines can also be fixed on the surface of a support with a binder. It is preferred to use resins having sufficient heat resistance as the binder. As the resins having heat resistance, solvent-soluble polyimide resins, thermosetting polyimide resins and thermosetting silicone resins are particularly preferably used.

A lubricating layer is provided on a protective layer for improving running durability and anticorrosion. Lubricants, e.g., well-known hydrocarbon lubricants, fluorine lubricants and extreme pressure additives, are used in a lubricating layer.

As hydrocarbon lubricants, carboxylic acids, e.g., stearic acid and oleic acid, esters, e.g., butyl stearate, sulfonicacids, e.g., octadecylsulfonic acid, phosphoric esters, e.g., monooctadecyl phosphate, alcohols, e.g., stearyl alcohol and oleyl alcohol, carboxylic acid amides, e.g., stearic acid amide, and amines, e.g., stearylamine, are exemplified.

The examples of fluorine lubricants include lubricants obtained by substituting a part or all of the alkyl groups of the above hydrocarbon lubricants with fluoroalkyl groups or perfluoro polyether groups. The examples of perfluoro polyether groups include a perfluoromethylene oxide polymer, a perfluoroethylene oxide polymer, a perfluoro-n-propylene oxide polymer (CF₂CF₂CF₂O)ₙ, a perfluoroisopropylene oxide polymer [CF(CF₃)CF₂O]ₙ, and copolymers of these polymers. Specifically, perfluoromethylene-perfluoroethylene copolymers having hydroxyl groups at molecular chain terminals (FOMBLIN Z-DOL, trade name, manufactured by AUSIMONT S.p.A.) are exemplified.

As extreme pressure additives, phosphoric esters, e.g., trilauryl phosphate, phosphorous esters, e.g., trilauryl phosphite, thiophosphorous esters, e.g., trilauryl trithiophosphite, thiophosphoric esters, and sulfur extreme pressure additives, e.g., dibenzyl disulfide, are exemplified.

These lubricants can be used alone or a plurality of lubricants can be used in combination. A lubricating layer can be formedby coating a solution obtained by dissolving a lubricant in an organic solvent on the surface of a protective layer by spin coating, wire bar coating, gravure coating or dip coating, alternatively depositing a lubricant on the surface of a protective layer by vacuum deposition. The coating amount of a lubricant is preferably from 1 to 30 mg/m², and particularly preferably from 2 to 20 mg/m².

It is preferred to use rust preventives in combination with a lubricant for bettering anticorrosion. As the examples of rust preventives, nitrogen-containing heterocyclic rings, e.g., benzotriazole, benzimidazole, purine and pyrimidine, derivatives obtained by introducing alkyl side chains to the mother nuclei of these nitrogen-containing heterocyclic rings, nitrogen- and sulfur-containing heterocyclic rings, e.g., benzothiazole, 2-mercaptobenzothiazole, tetraazaindene ring compounds and thiouracil compounds, and derivatives of these heterocyclic rings are exemplified. A rust preventive may be mixed with a lubricant and coated on a protective layer, alternatively a rust preventive may be coated on a protective layer prior to the coating of a lubricant, and then a lubricant may be coated thereon. The coating amount of rust preventives is preferably from 0.1 to 10 mg/m², and particularly preferably from 0.5 to 5 mg/m².

### EXAMPLE

The present invention is described in further detail below with reference to examples, however the present invention is not limited thereto.

### EXAMPLE 1

An undercoat layer coating solution comprising 3-glycidoxypropyltrimethoxysilane, phenyltriethoxysilane, hydrochloric acid, aluminum acetylacetonate and ethanol was coated on a polyethylene naphthalate film having a thickness of 63 µm and surface roughness (Ra) of 1.4 nm by gravure coating, and the coated solution was subjected to drying and curing at 100°C, thereby an undercoat layer having a thickness of 1.0 µm comprising a silicone resin was formed. A solution comprising silica sol having a particle size of 25 nm having mixed with the above undercoat layer coating solution was coated on the undercoat layer by gravure coating, thereby spines having a height of 15 nm were formed on the undercoat layer in density of 10/µm². The undercoat layer was formed on both sides of the support film. The web was mounted on a web sputtering apparatus and the following layers were formed on the undercoat layer by a DC magnetron sputtering method at room temperature by moving the web with closely adhering to a can cooled by water: a gas barrier layer comprising C in a thickness of 30 nm, an under layer comprising Ru in a thickness of 20 nm on the condition of Ar pressure of 20 mTorr (2.7Pa), andamagnetic layer comprising (Co₇₀-Pt₂₀-Cr₁₀)₈₈- (SiO₂)₁₂ in a thickness of 20 nm on the condition of Ar pressure of 20 mTorr (2.7 Pa). These gas barrier layer, under layer and magnetic layer were formed on both sides of the film. Subsequently, the web was mounted on a web type protective film forming apparatus, and a DLC protective layer comprising C/H of 68/32 in molar ratio was formed in a thickness of 8 nm on the condition of chamber pressure of 0.5 mTorr by the ion beamdepositionprocess according to the invention using ethylene gas and argon gas as reaction gases. At this time, voltage of 1, 500 V was applied to the anode. The protective layer was also provided on both sides of the film. In the next place, a lubricating layer having a thickness of 1 nm was formed on the surface of the protective layer by coating a solution obtained by dissolving a perfluoro polyether lubricant having hydroxyl groups at the molecule terminals (FOMBLIN Z-DOL, manufactured by Montefluos Ltd.) in a fluorine lubricant (HFE-7200, manufactured by Sumitomo 3M Limited) by gravure coating. The lubricating layer was also formed on both sides of the film. A3.7 inch size magnetic disc was punched out of the web, subjected to tape burnishing treatment, and built into a resin cartridge (for Zip 100, manufactured by Fuji Photo FilmCo., Ltd.), whereby a flexible disc was obtained.

### EXAMPLE 2

A disc-like sheet having a diameter of 130 mm was punched out of the web formed in Example by coating the undercoat layer thereon, and the disc was fixed on a circular ring, and a gas barrier layer, an under layer and a magnetic layer respectively having the same compositions as in Example 1 were coated on both sides of the sheet by a batch sputtering system, further DLC protective layers were formed on a protective film forming apparatus by the same ion beam deposition process as in Example 1. The same lubricating layers as in Example 1 were formed on the sheet by dip coating. A 3.7 inch size disc was punched out of the sheet, subjected to tape burnishing treatment, and built into a resin cartridge (for Zip 100, manufactured by Fuji Photo Film Co., Ltd.), whereby a flexible disc was obtained.

### EXAMPLE 3

A flexible disc was prepared in the same manner as in Example 1 except that a DLC protective layer having a thickness of 4 nm was formed with hydrocarbon gas and argon gas as the reactive gases, and then a DLC protective layer having a thickness of 2 nm was formed with hydrocarbon gas, argon gas and nitrogen gas as the reactive gases.

### EXAMPLE 4

A hard disc was prepared in the same manner as in Example 2 except that a 3.7 inch size specularly polished glass substrate was used. However, an undercoat layer was not provided and also the disc was not built into a cartridge.

### EXAMPLE 5

A magnetic tape having a width of 8mm was prepared in such a manner that in Example 1, a support made of polyaramid film having a thickness of 9 µm and surface roughness of 1.0 µm was used and gas barrier layer, under layer, magnetic layer, and protective layer was formed on one side of the support. Then on the other side of the support, a backcoat layer comprising a carbon black was formed.

### COMPARATIVE EXAMPLE 1

A flexible disc was prepared in the same manner as in Example 1 except that a protective layer was not formed.

### COMPARATIVE EXAMPLE 2

A flexible disc was prepared in the same manner as in Example 1 except that a protective layer of a carbon film was formed by a sputtering method.

### COMPARATIVE EXAMPLE 3

A flexible disc was prepared in the same manner as in Example 1 except that a protective layer of a DLC film was formed by an RF plasma CVD system. Further, bias voltage of -500 V was applied to the magnetic layer at this time.

### COMPARATIVE EXAMPLE 4

A flexible disc was prepared in the same manner as in Example 3 except that a magnetic layer comprising CoPtCr was formed.

These samples were evaluated as follows. The results obtained are shown in Table 1 below.

### Evaluation:

### (1) Magnetic characteristics

Coercive force (Hc) was measured by VSM.

### (2) Recording reproducing characteristics

Recording and reproduction of linear recording density of 400 kFCI were performed with a GMR head having a reproduction track breadth of 0.25 µm and a reproduction gap of 0.09 µm, and reproductionsignal/noise (S/N) ratio was measured. The engine speed was 4,200 rpm and the radial position was 35 mm at this time. Taking the S/N value in Example 1 as criterion, and each value was shown as the increase or decrease from the criterion.

### (3) Running durability

The time required for each sample to cause scraping was measured at the time of measurement of S/N ratio. The measured longest time was 300 hours.

### (4) Evaluation of film quality of DLC protective layer by Raman spectroanalysis

The film quality of each protective layer was evaluated by the ratio ID/IG obtained from Raman spectrum by Raman spectroanalysis and the ratio B/A.

Raman spectrum in the range of from 1,000 to 2,000 cm⁻¹ at the time of Ar laser irradiation was measured with a Raman spectrograph (manufactured by Renyshow), and waveform separation of D peak and G peak was performed, from which the ratio of the peak strengths (ID/IG) was obtained. Further, the ratio B/A of strength B of G peak containing a background to strength A of G peak not containing a background was found by using the inclination of the base line exclusive of the peak as the background.

### (5) Evaluation of surface resistance ratio

The electric resistance ratio was measured by the four-terminal resistance ratio gauge.

**TABLE 1**

| Example No. | Hc (kA/m) | S/N (dB) | Time Required to Cause Scraping (Hr) | ID/IG | B/A | Surface resistance resistance ratio (Ω/□) |
|---|---|---|---|---|---|---|
| Example 1 | 250 | 0 | >300 | 0.7 | 1.3 | 22.8 |
| Example 2 | 255 | +1.0 | >300 | 0.6 | 1.3 | 118.2 |
| Example 3 | 250 | +1.6 | >300 | 0.7 | 1.4 | 21.9 |
| Example 4 | 250 | -0.4 | >300 | 0.8 | 1.3 | 15.6 |
| Example 5 | 250 | -0.2 | >300 | 0.6 | 1.3 | 19.8 |
| Comparative Example 1 | 250 | -3.6 | 0 | - | - | 19.4 |
| Comparative Example 2 | 252 | -0.2 | 0.6 | - | - | 17.6 |
| Comparative Example 3 | 250 | 0 | 28 | 1.8 | 2.4 | 21.8 |
| Comparative Example 4 | 129 | -6.9 | 264 | 0.9 | 1.3 | 4.2 |

As can be seen from the results in Table 1, in the flexible discs, the hard disc, and the magnetic tape in the present invention, sufficient running durability in high density recording and reproduction with a GMR head is achieved. Further, from the results of evaluation (4), it is seen that sufficiently hard protective layers are formed in the samples of the present invention. On the other hand, in the sample in Comparative Example 1 not having a protective layer and in the sample in Comparative Example 2 using a sputtered protective layer, the scraping of medium occurred within a short time after loading of head. In the case where the protective layer was formed by an RF plasma CVD system, in the sample in Comparative Example 4 using a protective layer comprising CoPtCr which has a low electric resistance ratio, a hard protective layer was formed. On the other hand, in the sample in Comparative Example 3 using a granular magnetic layer, from the results of evaluation (4), it is thought that the ratio of the polymer components is high and the protective layer does not achieve sufficient hardness. Further, the number of defect by visual observation under strong halogen lamp irradiation is relatively increased, and this is presumed that the scraping of the medium occurred at early stage by the increase of frictional force at the time of head-medium contact.

The present invention is not limited to the specific above-described embodiments. It is contemplated that numerous modifications may be made to the present invention without departing from the spirit and scope of the invention as defined in the following claims.

This application is based on Japanese Patent application JP. 2003-345530, filed October 3, 2003, the entire content of which is hereby incorporated by reference.

## Claims

1. A magnetic recording medium comprising a support provided with at least on one side of the support a magnetic layer having at least a granular structure, and protective layer in this order,
wherein the protective layer is a hard carbon film formed by an ion beam deposition process and the protective layer has a ratio of a strength of G peak having a peak in a range of from 1, 500 to 1, 600 cm⁻¹ in Raman spectrum according to Raman spectroanalysis and a strength of D peak having a peak in a range of from 1,350 to 1,430 cm⁻¹, of from 0.5 to 1.0.

2. The magnetic recording medium according to claim 1, wherein the hard carbon film formed by an ion beam deposition process is formed by using a gridless ion source having at least a gas inlet capable of introducing hydrocarbon gas and a structure capable of applying a magnetic field and voltage.

3. The magnetic recording medium according to claim 1, wherein the granular structure comprises a ferromagnetic metal alloy and a nonmagnetic oxide and has a mixing ratio of a ferromagnetic metal alloy to a nonmagnetic oxide is from 95/5 to 80/20

4. The magnetic recording medium according to claim 1, wherein the magnetic layer having at least a granular structure has a thickness of 5 nm to 60 nm.

5. The magnetic recording medium according to claim 1, wherein the support is a polymer support having a thickness of 10 to 200 µm.

6. The magnetic recording medium according to claim 5, wherein the thickness is 10 to 100 µm.

7. The magnetic recording medium according to claim 5, wherein the polymer support comprises at least one kind of resin film selected from an aromatic polyimide, an aromatic polyamide, an aromatic polyamideimide, a polyether ketone, a polyether sulfone, a polyether imide, a polysulfone, a polyphenylene sulfide, a polyethylene naphthalate, a polyethylene terephthalate, a polycarbonate, a triacetate cellulose and a fluorine resin.

8. The magnetic recording medium according to claim 5, which further comprises undercoat layer on the support, the undercoat layer comprising at least one kind of material selected from a polyimide resin, a polyamideimide resin, a silicone resin and a fluorine resin.

9. The magnetic recording medium according to claim 8, wherein the undercoat layer has spines having a height of 5 to 60 µm thereon.

10. The magnetic recording medium according to claim 9, wherein the undercoat layer has a spine density of 0.1 to 100/µm²

11. The magnetic recording medium according to claim 9, wherein the spines comprise spherical silica particles.

12. The magnetic recording medium according to claim 9, wherein the protective layer has a thickness of 3 to 20 nm.

13. The magnetic recording medium according to claim 1, wherein the protective layer has a multilayer structure and an uppermost layer of the protective layer comprises a hard carbon film added with nitrogen.

14. The magnetic recording medium according to claim 1, which has an under layer containing at least Ru between the support and the magnetic layer.

15. The magnetic recording layer according to claim 1, which has a surface resistance ratio of 10 to 200 Ω/□, the surface resistance ratio being measured by four-terminal method.

16. A method for producing a magnetic recording medium according to claim 1, the magnetic recording medium comprising a support provided with at least on one side of the support a magnetic layer having at least a granular structure, and a protective layer in this order,
wherein the protective layer is formed by an ion beam deposition process using a gridless ion source having at least a gas inlet capable of introducing hydrocarbon gas and a structure capable of applying a magnetic field and voltage, the magnetic field applied to the ion source is a range of from 0.03 T to 1 T, and the voltage applied to the ion source is a range of from 100 to 3,000 V.

17. The method according to claim 16, wherein the ion beam deposition process is performed in a chamber pressure of 10 mTorr or less.
